# FASCICULE DE BREVET EUROPEEN

(11) **EP 0 847 637 B1**
(45) Date de publication et mention de la délivrance du brevet: **19.09.2001**
(21) Numéro de dépôt: 96929371.1
(22) Date de dépôt: 23.08.1996
(51) Int. Cl.: H04L 1/24, H04J 3/16

(54) **SYSTEME DE TRANSMISSION A PLUSIEURS CANAUX COMPORTANT UN CIRCUIT DE TEST**
MEHRKANALÜBERTRAGUNGSSYSTEM MIT TESTEINRICHTUNG
MULTICHANNEL TRANSMISSION SYSTEM WITH TEST CIRCUIT

(30) Priorité: 30.08.1995 FR 9510236
(43) Date de publication de la demande: 17.06.1998
(73) Titulaire: TRT Lucent Technologies S.A., 92350 Le Plessis-Robinson (FR)
(72) Inventeur: VERGNES, Alain, F-13530 Trets (FR)
(74) Mandataire: Ballot, Paul
(86) Numéro de dépôt international: FR9601320
(87) Numéro de publication internationale: WO9708865

(56) Documents cités:
- EP-A- 0 503 486
- US-A- 3 986 168
- US-A- 4 745 603
- PATENT ABSTRACTS OF JAPAN vol. 17, no. 328 (E-1385), 22 Juin 1993 & JP,A,05 037485 (TOSHIBA CORP.), 12 Février 1993,

## Description

La présente invention concerne un système de transmission à plusieurs canaux comportant un circuit de test formé à partir d'un seul générateur de séquence de test formé de mots pour tester ladite pluralité de canaux dans lesquels sont ménagées des positions de données utiles, système comportant, au moins, une partie émission et une partie réception.

Un tel système peut être un système de télécommunication à haute densité de multiplexage comme par exemple du type S.D.H. décrit dans les normes G.707, G.708, G.709... de l'UIT.

Un système du genre cité dans le préambule est décrit dans le document de brevet n° EP-A-0 642 241. Dans ce système connu, un seul générateur de séquences pseudo-aléatoire permet de tester une pluralité de canaux. Pour effectuer les tests, on transmet des séquences de test à un canal au niveau de la partie émission et, à la partie réception, on renvoie les séquences. Ces séquences renvoyées sont appliquées au canal suivant et ceci est effectué successivement pour tous les canaux.

Ce système connu présente l'inconvénient qu'il est difficile de trouver rapidement un canal défaillant lorsque l'on a affaire à un grand nombre de canaux. En effet, si plusieurs canaux sont mis en cascade, une erreur détectée signale que la cascade est mauvaise et qu'il faut ensuite déterminer le ou les canaux défaillants par une procédure itérative.

La présente invention propose un système du genre mentionné dans le préambule grâce auquel on n'est pas confronté à l'inconvénient précité, tout en ayant une forme de réalisation qui reste simple.

Pour cela un tel système est remarquable en ce que le circuit de test est pourvu :
- d'un circuit d'aiguillage pour connecter simultanément la sortie dudit générateur de séquence vers au moins un desdits canaux en fonction des tests à effectuer,
- d'un circuit de commande dudit générateur de séquences pour faire changer le mot de la séquence à chaque position de données utiles,
- d'un circuit de sortie rattaché audit générateur de séquence pour échantillonner et bloquer pour tous les canaux le code fourni durant ladite progression.

La description suivante faite en regard des dessins ci-annexés, le tout donné à titre d'exemple non limitatif, fera bien comprendre comment l'invention peut être réalisée.
La figure 1 montre un système conforme à l'invention.
La figure 2 montre schématiquement l'organisation d'une trame S.D.H.
La figure 3 montre en détail le circuit de test.
La figure 4 est un diagramme temps pour expliquer le fonctionnement du circuit de la figure 3.

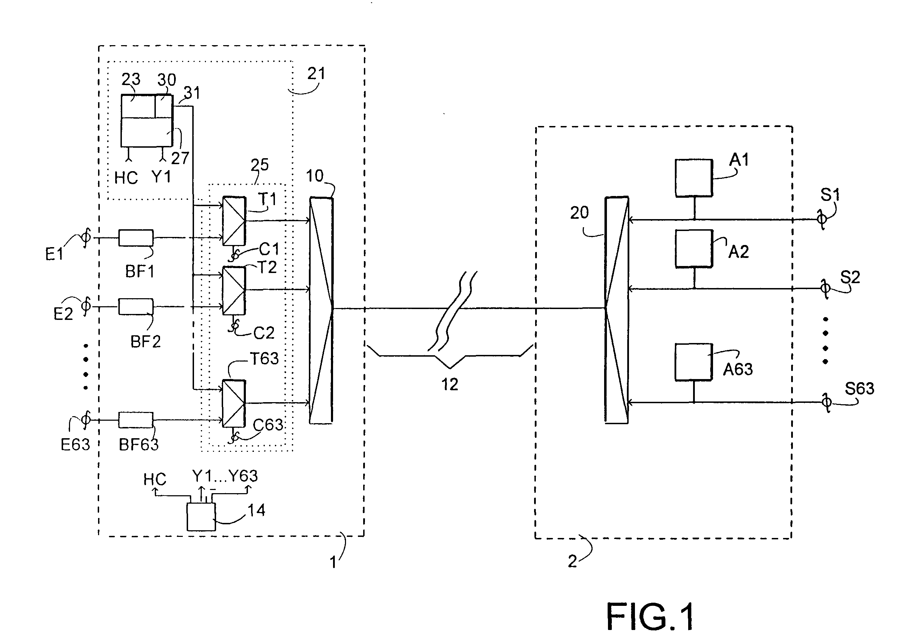

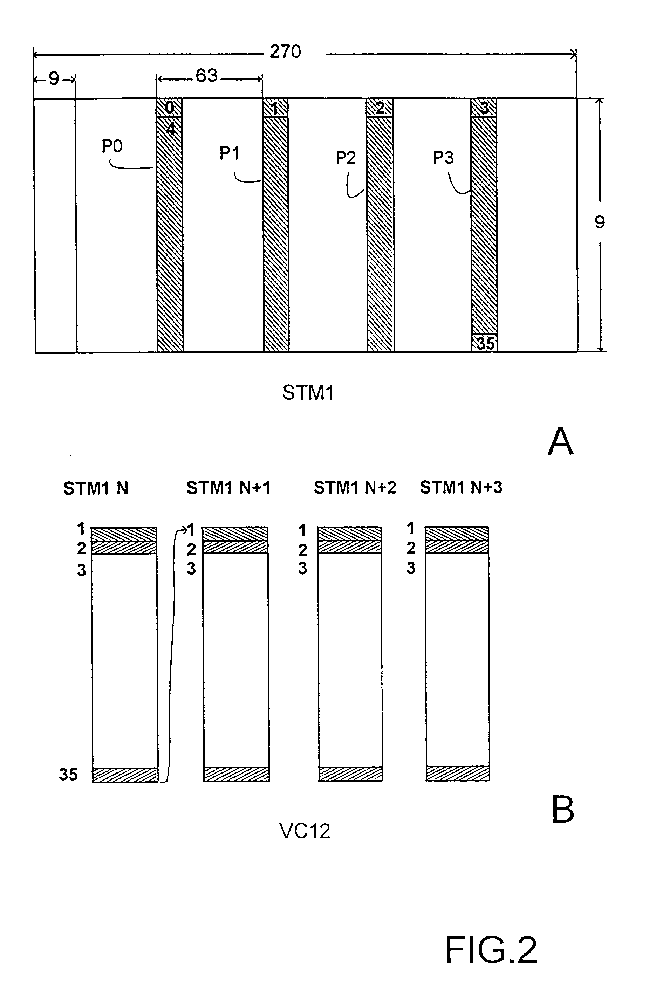

La figure 1 montre un système conforme à l'invention. Il est formé d'une partie émission 1 et d'une partie réception 2. Ce système transmet des trames S.D.H. du genre précité et dont la structure est explicitée schématiquement à la figure 2. La trame STM1, qui y est montrée, est formée de 2430 octets disposés selon un rectangle de 270 x 9 octets. Les parties hachurées : P0, P1, P2, P3 de la trame contiennent les octets d'un canal dénommé, selon la dénomination S.D.H : "conteneur virtuel VC12". La partie B de la figure 2 montre un peu mieux la constitution de ce conteneur VC12. Cette constitution implique une succession de trames STM1. Il y a ainsi 63 conteneurs dans la trame explicitée dans la partie A de la figure 2. Les données utiles et donc les séquences de test occupent les emplacements 3 à 34 des VC12 montrés dans la partie B de la figure 2. Les autres emplacements n'entrent pas dans le cadre de l'invention. La trame montrée sur cette figure 2 est transmise en série en la lisant de gauche à droite et de haut en bas.

A des bornes d'entrée E1, E2 à E63 de la partie émission 1, figure 1, on a affaire à des affluents plésiochrones synchronisés respectivement par une mémoire tampon BF1, BF2 à BF63. Ces affluents sont multiplexés par le multiplexeur 10 pour être transmis dans une trame STM sur une ligne de transmission 12 vers la partie réception 2. Pour fixer le rythme de multiplexage, un circuit d'horloge 114 fournit tous les signaux utiles à cette partie émission, notamment des signaux d'horloge HC et des signaux Y1 à Y63. Ces signaux sont relatifs à chacun des affluents correspondant aux emplacements 3...34 qui transmettent l'information utile.

Dans la partie réception 2, la trame STM est démultiplexée au moyen d'un démultiplexeur 20 et les informations transmises sont restituées aux bornes de sorties S1, S2 à S63.

Un circuit de test 21 permet d'effectuer des tests de ce système : on peut injecter des séquences de mots de test qui sont définies par la recommandation 0.151 de l'UIT. Ces séquences de mots sont fournies par un générateur de séquences 23 qui délivre des mots de huit bits à partir d'une séquence pseudo-aléatoire. Ces huit bits correspondent au format d'octet précité. Selon l'invention, ces mots sont injectés dans l'un des affluents ou canaux au moyen d'un circuit d'aiguillage 25 formé par des multiplexeurs de test T1, T2 à T63 munis de commande de changement de positions C1, C2 à C63 et affectés à chacune des bornes d'entrée E1, E2 à E63. Ces multiplexeurs sont à deux positions. Un signal sur leur commande C1 à C63 les met dans l'une de ces positions. Dans une première position, la séquence de test est insérée dans l'affluent. Dans la deuxième position, ce sont les informations aux bornes E1, E2 à E63 qui sont transmises. Ainsi en agissant sur ces commande C1 à C63 on peut tester n'importe quel affluent et n'importe quel nombre de ces affluents en même temps. Les affluents contenant les séquences de test doivent être émis sans justification (bit ou octet), les pointeurs TU12 restent identiques entre eux.

Au niveau de la partie réception, ces séquences de test sont reconnues ou non par un analyseur A1, A2 à A63, affecté chacun aux bornes de sortie S1, S2 à S63. On détermine ainsi la qualité des canaux ou affluents testés. Comme le générateur est unique pour tous les canaux, il est prévu : un circuit de commande 27 affecté au circuit 25 pour faire changer le mot de la séquence une fois que la position VC-n/C-n/DATA correspondant aux emplacements 3...34 a été présentée sur la trame STM1 (8 mouvements de bit = 1 nouvel octet) et un circuit de sortie 30 pour échantillonner l'octet et le rendre disponible à une sortie 31 pour tous les canaux.

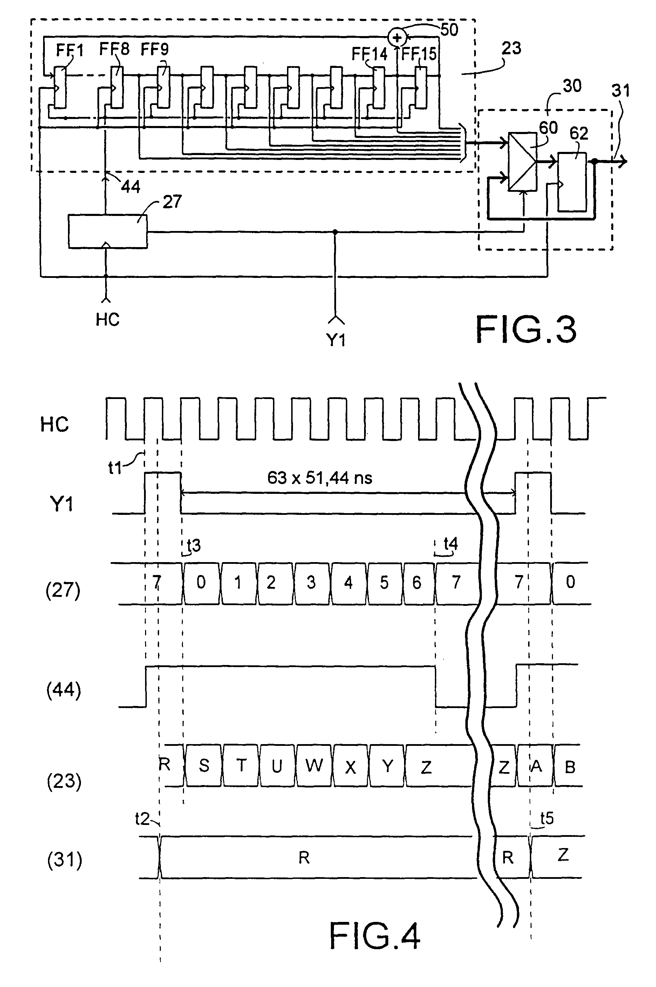

A la figure 3, on a représenté en détail le générateur de séquence 23, le circuit de commande 27 et le circuit de sortie 30.

Dans le cadre de l'exemple décrit, le générateur 23 est formé de quinze bascules FF1 à FF15 montées en registre à décalage. L'entrée de ce registre est située à l'entrée de données de la bascule FF1. Cette entrée est reliée à la sortie d'un additionneur modulo 2 portant la référence 50. Cet additionneur 50 est muni de deux entrées qui sont respectivement reliées aux sorties des bascules FF14 et FF15. Les mots à huit bits sont prélevés aux sorties des bascules FF8 à FF15 et appliqués au circuit de sortie 30. Le décalage des données se produit au rythme de l'horloge HC avec une commande d'autorisation 44.

Le circuit de commande 27 fournit le signal à cette commande d'autorisation 44. Ce circuit est constitué à partir d'un compteur à huit états qui compte les impulsions HC. Ce compteur est dit à saturation car il s'arrête de compter dès que son contenu atteint "7", comme cela sera expliqué plus loin. Ce compteur démarre dès que le signal Y1, fourni par le circuit d'horloge 14, est actif soit Y1 = 1. Il est à noter que n'importe lequel des signaux Y1 à Y63 peut être utilisé par l'invention.

Le circuit de sortie 30 est formé par un échantillonneur-bloqueur représenté sur la figure par un multiplexeur 60 et un registre 62 d'une capacité suffisante pour contenir un octet. Ce registre est muni d'une commande d'enregistrement qui reçoit les signaux HC. Le multiplexeur 60 dirige vers l'entrée de ce registre le mot aux sorties des bascules FF9 à FF15 lorsque Y1 est actif (c'est-à-dire lorsque la séquence de test n'est pas en cours d'élaboration) et connecte la sortie de ce registre vers son entrée lorsque le signal Y1 n'est pas actif.

La figure 4 montre le diagramme temps qui explicite le fonctionnement de ce circuit.

Sur cette figure, l'instant t1 indique l'apparition de la valeur "1" du signal Y1, ceci entraîne que le signal à la sortie 44 prend aussitôt la valeur "1" pour autoriser, d'une part, le comptage du compteur 27 au prochain front montant du signal d'horloge HC et d'autre part le chargement dans le registre 62 du mot R aux sorties des bascules FF8 à FF15. Ce chargement est effectif à l'instant t2. L'instant t3 indique le début du comptage du compteur et lorsque le contenu de ce compteur devient égal à "7" ce qui survient à l'instant t4, le générateur de séquence est figé. Les 8 nouveaux bits de la séquence (le mot Z) sont prêts à être échantillonnés. Le registre 62 est prêt à être rechargé à la prochaine trame (voir instant t5). Les différents mots transitoires S, T, U, V, ...Y ne seront jamais échantillonnés.

Le signal appliqué à la commande d'autorisation peut être considéré comme un OU logique du signal Y1 et des états du compteur 27 différents de "7".

Une telle architecture assure un gain en composant et/ou en surface de silicium appréciable lors du multiplexage de plusieurs dizaines de canaux (notamment en S.D.H.).

## Revendications

1. Système de transmission à plusieurs canaux comportant un circuit de test formé à partir d'un seul générateur de séquence de test (23) formé de mots pour tester ladite pluralité de canaux dans lesquels sont ménagées des positions de données utiles, système comportant, au moins, une partie émission (1) et une partie réception (2), **caractérisé en ce que** le circuit de test est pourvu :
- d'un circuit d'aiguillage (25) pour connecter simultanément la sortie dudit générateur de séquence (23) vers au moins un desdits canaux en fonction des tests à effectuer,
- d'un circuit de commande (27) dudit générateur de séquence pour faire changer le mot de la séquence à chaque position de données utiles,
- d'un circuit de sortie (30) rattaché audit générateur de séquence pour échantillonner et bloquer pour tous les canaux le code fourni durant ladite progression.

2. Système de transmission à plusieurs canaux selon la revendication 1 **caractérisé en ce que**, dans la partie réception (2), il est prévu un circuit de reconnaissance de séquence de test (A1 à A63).

3. Partie émission d'un système de transmission à plusieurs canaux comportant un circuit de test formé à partir d'un seul générateur de séquence de test (23) formé de mots pour tester ladite pluralité de canaux dans lesquels sont ménagées des positions de données utiles, **caractérisée en ce que** le circuit de test est pourvu :
- d'un circuit d'aiguillage (25) pour connecter simultanément la sortie dudit générateur de séquence (23) vers au moins un desdits canaux en fonction des tests à effectuer,
- d'un circuit de commande (27) dudit générateur de séquence pour faire changer le mot de la séquence à chaque position de données utiles,
- d'un circuit de sortie (30) rattaché audit générateur de séquence pour échantillonner et bloquer pour tous les canaux le code fourni durant ladite progression.

## Patentansprüche

1. Mehrkanalübertragungssystem mit Testschaltung aus nur einem Testsequenz-Generator (23), die aus Wörtern besteht, um die mehreren Kanäle zu testen, in denen Positionen für Nutzdaten vorgesehen sind, wobei das System mindestens einen Sendeteil (1) und einen Empfangsteil (2) aufweist, **dadurch gekennzeichnet, dass** die Testschaltung versehen ist mit:
- einer Verzweigungsschaltung (25), um gleichzeitig den Ausgang des Sequenzgenerators (23) mit mindestens einem der Kanäle in Abhängigkeit von den auszuführenden Tests zu verbinden,
- einer Steuerschaltung (27) des Sequenzgenerators, um das Wort der Sequenz an jeder Position der Nutzdaten zu ändern,
- einer Ausgangsschaltung (30), die mit dem Sequenzgenerator verbunden ist, um den während dieses Verlaufes ausgegebenen Code abzutasten und zu sperren.

2. Mehrkanalübertragungssystem nach Anspruch 1, **dadurch gekennzeichnet, dass** im Empfangsteil (2) eine Testsequenz-Wiedererkennungsschaltung (A1 bis A63) vorgesehen ist.

3. Sendeteil eines Mehrkanalübertragungssystems mit einer Testschaltung aus nur einem Testsequenz-Generator (23), die aus Wörtern gebildet wird, um die mehreren Kanäle zu testen, in denen Positionen für Nutzdaten vorgesehen sind, **dadurch gekennzeichnet, dass** die Testschaltung versehen ist mit:
- einer Verzweigungsschaltung (25), um den Ausgang des Sequenzgenerators (23) gleichzeitig mit mindestens einem der Kanäle in Abhängigkeit von den auszuführenden Tests zu verbinden,
- einer Steuerschaltung (27) des Sequenzgenerators zum Ändern des Wortes der Sequenz an jeder Position der Nutzdaten,
- einer Ausgangsschaltung (30), die mit dem Sequenzgenerator verbunden ist, um den während dieses Verlaufes ausgegebenen Code für alle Kanäle abzutasten und zu sperren.

## Claims

1. Multichannel transmission system comprising a test circuit made up of a single generator of a test sequence (23) made up of words for testing the said plurality of channels in which useful data positions are devised, the system comprising at least one transmission portion (1) and one reception portion (2), **characterized in that** the test circuit is provided:
- with a routing circuit (25) for simultaneously connecting the output of the said sequence generator (23) to at least one of the said channels on the basis of the tests to be conducted,
- with a circuit (27) for controlling the said sequence generator for changing the word of the sequence at each useful data position,
- with an output circuit (30) linked to the said sequence generator for sampling and holding, for all the channels, the code provided during the said progression.

2. Multichannel transmission system according to Claim 1, **characterized in that** a test sequence recognition circuit (A1 to A63) is provided in the reception portion (2).

3. Transmission portion of a multichannel transmission system comprising a test circuit made up of a single generator of a test sequence (23) made up of words for testing the said plurality of channels in which useful data positions are devised, **characterized in that** the test circuit is provided:
- with a routing circuit (25) for simultaneously connecting the output of the said sequence generator (23) to at least one of the said channels on the basis of the tests to be conducted,
- with a circuit (27) for controlling the said sequence generator for changing the word of the sequence at each useful data position,
- with an output circuit (30) linked to the said sequence generator for sampling and holding, for all the channels, the code provided during the said progression.
